# EUROPEAN PATENT APPLICATION

(11) **EP 2 042 565 A1**
(43) Date of publication of application: **01.04.2009**
(21) Application number: 07018524.4
(22) Date of filing: 20.09.2007
(51) Int. Cl.: C09D 9/00

(54) **Stripping composition**

(71) Applicant: Akzo Nobel Coatings International B.V., 6824 BM Arnhem (NL)
(72) Inventor: De Veer, Michiel Antonius Josephus, 5243 WD Rosmalen (NL); Van Eek, Gerrit Benjamin, 4204 CM, Gorinchem (NL); Koolhaas, Gerard Jan Antonie Aart, 2415BD, Nieuwerbrug (NL); Worthington, Willow Minke, Reading, RG1 3JT (GB)
(74) Representative: Schalkwijk, Pieter Cornelis

(57) **Abstract**

A stripping composition for use in removing dried, architectural coatings from a substrate to which they are adhered, said coatings containing polymeric binder, the composition comprising, on a weight basis calculated on the total weight of the stripping composition,
i) from 8.5 to 40% of a solvent mixture capable of softening and lifting the binder from the substrate
ii)from 15 to 90% of a particulate inorganic material
iii) from 0.1 to 1.5% of a polymeric thickener material

wherein the composition is free of film forming polymer other than the thickener.

## Description

The present invention relates to low solvent containing stripping compositions that remove dried coatings from substrates by forming a dry residue which can be easily removed by brushing. In particular, it relates to strippers that remove architectural coatings that dry at ambient temperature through solvent evaporation and/or autoxidation.

Dried coatings such as paints, varnishes and woodstains eventually need to be removed from the substrate to which they have been applied. Typical substrates include wood and metal. As most coatings are multilayer systems, the speed of penetration through the layers is an important characteristic of the stripping composition.

Known stripping compositions include thickened active solvent mixtures which act by attacking the dried coating film. Generally, the solvents swell the film causing it to bubble and lift away from the substrate rather than dissolve it. One of the disadvantages of such prior art stripping compositions is that the swollen film must be removed from the substrate, usually by scraping, before the solvents evaporate, otherwise the film readheres to the substrate and hardens making it difficult to remove. Because the film contains high levels of solvent, the resulting residue is gelatinous and sticky, and great care must be taken when removing it from the substrate. Otherwise, if dropped onto a carpet or similar covering, the residue will be very difficult to remove.

More recently, European Patent Application EP 0867482 discloses stripping compositions comprising film forming polymers, mineral particles and thickened solvent compositions. In these, the swollen film lifts from the substrate and tends to stick to the added particles. As the solvents evaporate, the film remains attached to the particles rather than reattaching itself to the substrate, forming a residue. Thus there is less urgency to remove the residue from the substrate before the solvents evaporate. Whilst this is an improvement over the prior art, the presence of film forming polymer, in addition to any polymeric thickener, tends to make the residue sticky and consequently difficult and unpleasant to remove. This is exacerbated by the high solvent content of such compositions which plasticize the polymer.

In addition to the plasticizing effect of the high solvent levels, such high levels, typically 50% by weight based on the total composition, are undesirable because they produce malodours, especially in confined, poorly ventilated spaces, such as small rooms. They are also considered bad for the environment and detrimental to the health of users.

We have now discovered stripping formulations of low solvent content and which are substantially quicker to dry and easier to use than known compositions.

Accordingly there is provided a stripping composition for use in removing dried, architectural coatings from a substrate to which they are adhered, said coatings containing polymeric binder, the composition comprising, on a weight basis calculated on the total weight of the stripping composition,
i) from 8.5 to 40% of a solvent mixture capable of softening and lifting the binder from the substrate
ii) from 15 to 90% of a particulate inorganic material
iii) from 0.1 to 1.5% of a polymeric thickener material
wherein the composition is free of film forming polymer other than the thickener.

Surprisingly, in the absence of any film forming polymer and with such a low level of thickener material, the composition nevertheless adheres to vertical surfaces.

Preferably, the stripping composition comprises from 15 to 40%, more preferably from 20 to 35% and most preferably from 25 to 30% of the solvent mixture. Compositions containing lower amounts of solvent are preferred as they produce residue which is less sticky, especially when the coating composition being stripped is based on a non-crosslinked polymeric binder, for example, a paint based on emulsion polymer as the binder. Such low solvent compositions are also preferred for reasons of odour, health and environmental impact. Preferably the solvent mixture is free of methylene chloride.

Preferably, the stripping composition comprises from 25 to 90%, more preferably from 35 to 90%, still more preferably from 60 to 90% and most preferably from 65 to 85% of particulate inorganic material. Compositions containing such high amounts of the inorganic material are favoured as they tend to produce dry residue which is easy and convenient to remove.

Preferably, the weight ratio of inorganic material to solvent in the stripping composition is from 1.5 to 4.0, more preferably from 2.0 to 3.0 and most preferably from 2.3 to 2.9. This is advantageous, producing drier residue that is easier to remove than at the lower ratios. The volume fraction of the inorganic material in the composition is preferably from 37 to 60%, more preferably from 40 to 55%, most preferably from 45 to 52%. At volume fractions greater than 60%, the stripping composition forms a powdery crumb rather than a viscous paste, which is preferred as this enables it to adhere to vertical surfaces.

The composition preferably comprises from 0.2 to 1.2% by weight of thickener, more preferably from 0.2 to 1.0, even more preferably from 0.25 to 0.80, yet more preferably from 0.25 to 0.60, still more preferably from 0.30 to 0.55 and most preferably from 0.30 to 0.45.

Preferably the thickener is a cellulose type, even more preferably it is a solution polymer dissolvable or swellable in the continuous phase of the composition. Most preferred are the cellulose ether thickeners.

Preferably, the weight ratio of pigment to thickener is from 40 to 500, preferably from 75 to 300, even more preferably from 100 to 300 and most preferably from 100 to 200. A high pigment to thickener ratio is preferred because it forms a residue that is drier and casier to remove from the substrate.

The stripper composition may also contain evaporation inhibitors, such as Paraffin 50/52.

In a variation of the invention, the composition further comprises up to 1.5% by weight of film forming polymer.

In a second aspect of the invention there is provided a method of removing a film of paint, varnish or woodstain from a substrate, which film contains a binder softenable by means of contact with the solvent of the stripping compositions according to any one of the preceding claims, and wherein the method involves
i) softening the film by applying onto the film a layer of a stripping composition according to the invention, causing a mixture of the solvent and softened residue of the film to absorb on the particulate mineral material in the layer of stripping composition
ii) the layer of stripping composition containing the softened film residue is retained on the substrate until the solvent has evaporated to leave a dry layer of particulate mineral material containing the film residue and
iii) the dry layer of particulate mineral material and film residue is physically removed from the substrate as a dry residue.

### Testing

### Stripping

Samples of the stripper compositions were tested to evaluate their effectiveness at removing multiple layers of paint from according to the following methods, one for old alkyd paint and one for emulsion paint. The alkyd paint is crosslinked through the mechanism of autoxidation. The emulsion paint is not crosslinked.

### Alkyd Paint

Hardboard panels 12 cm x 24 cm are primed with a single coat of solventborne alkyd primer (Histor Super Grondverf available from Sigma), applied by brush. This is allowed to dry for 1 day, and then overcoated with 14 coats of solventbome alkyd gloss paint (Histor Perfect Finish, available from Sigma), each in a different colour, allowing 1 day drying time between coats. The surface is denibbed lightly with 3M Scotch Brite between coats. The finished panel is aged indoors for at least 6 months before use.

### Emulsion Paint

Hardboard panels are prepared in a similar manner, using a water based primer (Dulux trade Super Grip Primer, available from Imperial Chemical Industries) followed by 5 coats of emulsion paint (PU Zijdeglanslak available from Wijzonol). The surface is denibbed lightly with 3M Scotch Brite between coats. Again the finished panel is aged indoors for at least 6 months before use.

To test a stripper sample, a 1mm thick layer is applied to an area of the test panel of approximately 2.2 x 12 cm. The stripper is inspected at regular intervals to determine the number of layers of paint it has penetrated, assessed by noting the colour of the remaining paint layer.

### Crusting

The panels prepared for testing stripping effectiveness above were also evaluated for crust formation, dryness of crust and ease of removal.

The following ingredients were used in the preparation of the examples.

Estasol is a mixture of dibasic esters dimethyl adipate, dimethyl glutarate and dimethyl succinate obtainable from IMCD Benelux BV.

Methocel 311 is a cellulose ether thickener available from Dow Chemical Company Lutensol® TO 5 is a surfactant available from BASF
Disperbyk® is a dispersing agent available from Byk
Paraffin wax 50/52 is a paraffin wax available from Wintershall
HDK N20 is a fumed silica available from Wacker.
Ulmerweiss WL is CaCO3 obtainable from Elt Chemicals BV in the Netherlands. Speswhite is china clay available from Ingfer Fillers and Minerals in the Netherlands. Luvitec® K90 is polyvinyl pyrrolidone, a film forming polymer obtainable from BTC Benelux
n-butyl acetate, butanone, Isopar G and 2-amino ethanol are available from Chemproha BV
Dimethyl sulfoxide (DMSO) is available from IMCD Benelux

### Examples

The invention will now be illustrated by the following examples. All weights are as per Table 1.

### Example 1

Method of manufacture

In an appropriately sized container, mix the Estasol and the 2-amino propanol.

To an 800 litre vessel having a diameter of 1.08 metres and fitted with a stirrer arrangement having three vertical sidescrapers and a disperser of 0.35 metre diameter, charge the DMSO and Estasol/2-amino propanol mixture. Add the powdered Methocell 311 whilst stirring in short bursts to incorporate the powder. Continue mixing until the Methocell 311 is fully swollen- this takes about 10 minutes. Continue stirring and add n-butyl acetate and Lutensol T0 5.

In a separate container dissolve Paraffin 50/52 in Isopar G and add the resulting solution to the vessel, followed by the butanone, while stirring. Finally, increase the disperser speed to approximately 500-1000 rpm, slowly add the Ulmerweiss WL and disperse until smooth.

### Comparative Example A

The same equipment is used as in Example 1.
Add Shellsol A to the vessel followed by the powdered Methocell 311, whilst stirring in short bursts to incorporate the powder. Continue mixing until the Methocell 311 is fully swollen- this takes about 10 minutes. Continue stirring and add the N-methyl pyrollidone (NMP) followed by HDK N20. Add the Lutensol T05 and the Disperbyk. Mix the Luvitec K90 and Speswhite and slowly add the resulting mixture to the vessel. Disperse at 1500 to 2000 rpm until smooth.

**Table 1**

| Ingredient | SG | Example 1 | | Comparative Example A | |
|---|---|---|---|---|---|
| | | kg | (wt%) | kg | (wt%) |
| 1.n-butyl acetate | 0.88 | 99.99 | (11.11) | | |
| 2. DMSO | 1.09 | 69.75 | (7.75) | | |
| 3. Estasol | 1.09 | 56.61 | (6.29) | | |
| 4. Butanone | 0.80 | 12.78 | (1.42) | | |
| 5. Isopar G | 0.75 | 7.92 | (0.88) | | |
| 6. NMP | 1.03 | | | 112.50 | (15.00) |
| 7. Shellsol A | 0.88 | | | 308.25 | (41.10) |
| 8. 2-amino ethanol | 1.02 | 0.54 | (0.06) | | |
| 9. Methocell 311 | 1.20 | 4.05 | (0.45) | 3.60 | (0.48) |
| 10. Lutensol TO 5 | 0.96 | 3.42 | (0.38) | 13.50 | (1.80) |
| 11. Disperbyk | 1.08 | | | 0.90 | (0.12) |
| 12. Paraffin Wax 50/52 | 0.90 | 1.98 | (0.22) | | |
| 13. Ulmerweiss WL | 2.70 | 642.96 | (71.44) | | |
| 14. HDK N20 | 2.20 | | | 11.25 | (1.50) |
| 15. Speswhite | 2.60 | | | 285.00 | (38.00) |
| 16. Luvitec K90 | 1.10 | | | 15.00 | (2.00) |

### Results

The two strippers were assessed for stripping effectiveness and crust formation on pre-prepared panels as described above.

### Penetration and removal of paint layers

Alkyd paint
The stripper of Example 1 penetrated through the 15 layers of alkyd paint in two hours and a dry crust was formed that was easily removed by brushing. In contrast, Comparative Example A had penetrated only 5 layers in that time and it took a further 13 hours before all layers were penetrated.

Emulsion paint
The stripper of Example 1 penetrated through the 6 layers in 20 minutes whilst the stripper of Comparative Example A took about 40 minutes. The stripper of Example 1 forms a hard, albeit, rubbery crust that is easy to remove, whilst Comparative Example A forms a slimy, gelatinous material which is difficult to remove with either a brush or a filling knife.

Thus, not only is the stripper of the invention faster, easier and more convenient to use, it also contains low solvent.

## Claims

1. A stripping composition for use in removing dried, architectural coatings from a substrate to which they are adhered, said coatings containing polymeric binder, the composition comprising, on a weight basis calculated on the total weight of the stripping composition,
i) from 8.5 to 40% of a solvent mixture capable of softening and lifting the binder from the substrate
ii) from 15 to 90% of a particulate inorganic material
iii) from 0.3 to 1.5% of a polymeric thickener material
wherein the composition is free of film forming polymer other than the thickener.

2. A stripping composition according to claim 1 wherein the solvent mixture comprises from 15 to 40% by weight of the total composition.

3. A stripping composition according to claim 1 or claim 2 wherein the solvent mixture comprises from 20 to 35% by weight of the total composition.

4. A stripping composition according to any one of the previous claims wherein the solvent mixture is free of methylene chloride.

5. A stripping composition according to any one of the previous claims comprising from 60 to 90% by weight of the particulate mineral material.

6. A stripping composition according to any one of the previous claims wherein the ratio of inorganic material to solvent mixture is from 1.5 to 4.0.

7. A stripping composition according to any one of the previous claims wherein the polymeric thickener material is a cellulose ether.

8. A stripping composition according to any one of the previous claims wherein the polymeric thickener material comprises from 0.30 to 0.45 % by weight of the composition.

9. A method of removing a film of dried, architectural coatings from a substrate to which they are adhered, which film contains a binder softenable by means of contact with the solvent mixture of the stripping compositions according to any one of the preceding claims, and wherein the method involves
i) softening the film by applying onto the film a layer of a stripping composition according to any one of the preceding claims, causing a blend of the solvent mixture and softened residue of the film to absorb on the particulate mineral material in the layer of stripping composition
ii) the layer of stripping composition containing the softened film residue is retained on the substrate until the solvent has evaporated to leave a dry layer of particulate mineral material containing the film residue and
iii) the dry layer of particulate mineral material and film residue is physically removed from the substrate as a dry residue.
